# EUROPEAN PATENT SPECIFICATION

(11) **EP 3 453 246 B1**
(45) Date of publication and mention of the grant of the patent: **09.06.2021**
(21) Application number: 18193077.7
(22) Date of filing: 06.09.2018
(51) Int. Cl.: A01D 43/063

(54) **LAWN-GRASS MOWING MACHINE**
RASENMÄHMASCHINE
TONDEUSE À GAZON

(30) Priority: 11.09.2017 JP 2017174192
(43) Date of publication of application: 13.03.2019
(73) Proprietor: Iseki & Co., Ltd., Matsuyama-shi, Ehime 799-2692 (JP)
(72) Inventor: TODA, Hirotaka, Tobe-cho, Iyo-gun, Ehime 791-2193 (JP); KURITA, Kazuyuki, Tobe-cho, Iyo-gun, Ehime 791-2193 (JP)
(74) Representative: Spengler, Robert

(56) References cited:
- EP-A1- 2 850 931
- EP-A1- 3 025 574
- US-A- 4 782 650
- US-A- 5 832 708

## Description

### BACKGROUND OF THE INVENTION

### Field of the Invention

The present invention relates to a lawn-grass mowing machine to which a mower which performs lawn-grass mowing working is installed, and particularly relates to the lawn-grass diffusion structure inside the collector.

Document EP 3 025 574 A1 discloses a lawn-grass mowing machine comprising a collector which contains lawn-grass mowed with a mower, an introducing guide provided inside the collector which receives mowed-grass, a diffusion guiding plate arranged at one end side of the introducing guide, and a bracket member holding a fulcrum shaft. The diffusion guiding plate is held by the fulcrum shaft and configured so as to be swingable.

In the mower arranged at the front part of the running vehicle-body, which performs lawn-grass mowing working, the lawn-grass mowed by the mower is introduced into the collector by way of the duct. Inside this collector, a swinging part is provided at the upper part of the shooter for introducing, and the mowed lawn-grass is made to evenly accumulate throughout the whole inner part of the collector. This swinging part possesses a discharge guiding plate which is made to go and return in the left-and-right direction, and the left and right side parts of the discharge guiding plate are bent so that the mowed-grass which is successively discharged can be smoothly guided to the inner part of the collector (refer to Japanese Patent Application Publication No. 2015-57983).

Moreover, in a case where the swinging part is provided in a box-shape, preferable is a shape for which attachment of the filling-up sensor for sensing that the collector has been filled up with mowed-grass is easy (refer to Japanese Patent Application Publication No. 2015-57983).

### SUMMARY OF THE INVENTION

The configuration of the swinging part inside the collector of the riding lawn-grass mowing machine of Japanese Patent Application Publication No. 2015-57983 does not disclose the supporting configuration of the fulcrum of the discharge guiding plate, but the present inventors have noticed that, in a case where the supporting configuration is configured at the collector inner wall or at the upper part of the shooter for introducing, a rational supporting configuration is required, for which the left-and-right going-and-returning movement of the discharge guiding plate is not obstructed and a necessary guiding face is ensured. Moreover, the present inventors have noticed that, in Japanese Patent Application Publication No. 2015-57983, the configuration is only disclosed for which the swinging part is formed in a box-shape and the filling-up sensor is fixed to be provided, and that relation to the swinging and the mowed-grass discharging or the diffusion situation is not considered.

This invention, in consideration of the above, can facilitate the mowed-grass diffusion discharging action inside the collector, and will make the grasp of the accumulation situation by the filling-up sensing unit be properly performed.

The present invention is a lawn-grass mowing machine, comprising:
a collector (32) which contains lawn-grass mowed with a mower (5);
an introducing guide (70) provided inside the collector (32), which receives mowed-grass;
a diffusion guiding plate (73) arranged at one end side of the introducing guide (70);
a bracket member (71); and
a fulcrum shaft (72) held by the bracket member (71), wherein
the diffusion guiding plate (73) is held by the fulcrum shaft (72), and
the diffusion guiding plate (73) is configured so as to be swingable,
**characterized in that**
the bracket member (71) is fixed to the introducing guide (70).

A first embodiment of the present invention is the lawn-grass mowing machine according to claim 2 wherein the introducing guide (70) is provided in a slant posture,
a lower end side of the bracket member (71) is fixed to a side face of the introducing guide (70), and
the fulcrum shaft (72) is held by an upper end side of the bracket member (71).

A second embodiment of the present invention is the lawn-grass mowing machine according to claim 3, wherein
the introducing guide (70) and the diffusion guiding plate (73) are provided so as to be displaced to one side of left and right sides with respect to a vehicle-body left-and-right direction, and
a swinging angle (αR) of the diffusion guiding plate (73) to the one side is smaller than a swinging angle (αL) to the other side.

A third embodiment of the present invention is the lawn-grass mowing machine according to claim 4, wherein
edges of the left and right sides of the diffusion guiding plate (73) with respect to the vehicle-body left-and-right direction, are bent, so that the diffusion guiding plate (73) comprises a wall part (73bR) at the one side to which the diffusion guiding plate (73) is displaced, and a wall part (73bL) at the another side, and
a shielding square-measure of the wall part (73bL) at the other side is smaller than a shielding square-measure of the wall part (73bR) at the one side.

A fourth embodiment of the present invention is the lawn-grass mowing machine according to claim 5, wherein on the wall part (73bL) at the other side, a filling-up sensor (82) for sensing a filling-up of the lawn-grass, is provided.

According to claim 3, the fulcrum shaft 72 is held by the upper end side of this bracket member 71, the diffusion guiding plate 73 is provided to the fulcrum shaft 72 so as to be swingable, and the bracket member 71 is fixed to the introducing guide 70. Hence, the position relation between the diffusion guiding plate 73 and the introducing guide 70 is constant, and the diffusion discharging action along with swinging can be maintained so as to be the prescribed action.

According to claim 4, even if the introducing guide 70 and the diffusion guiding plate 73 are provided so as to be displaced to one side inside the collector 32, the accumulation situation of mowed-grass inside the collector 32 can be approximately even.

According to claim 5, the filling-up sensor 82 moves so as to go and return along with swinging of the diffusion guiding plate 73, and the filling-up situation by the mowed-grass filling can be properly sensed.

### BRIEF DESCRIPTION OF THE DRAWINGS

FIG. 1 is a left side view of the riding lawn-grass mowing machine of the embodiment in the present invention;
FIG. 2 is a perspective view of the riding lawn-grass mowing machine of the embodiment in the present invention from which the collector has been detached, viewed down from a left oblique rear side;
FIG. 3 is a perspective view of the riding lawn-grass mowing machine of FIG. 2 of the embodiment in the present invention from which the bumper has been detached, viewed down from a right oblique rear side;
FIG. 4 is a rear view of the riding lawn-grass mowing machine of the embodiment in the present invention;
FIG. 5A is a perspective view of the bumper of the embodiment in the present invention, viewed from the front side,
FIG. 5B is a perspective view of the bumper of the embodiment in the present invention, viewed from the rear side, and
FIG. 5C is a left side view of the bumper of the embodiment in the present invention;
FIG. 6A is a plan view of the mower of the embodiment in the present invention, and
FIG. 6B is a left side view of the mower of the embodiment in the present invention;
FIG. 7 is a perspective view which shows the collector, the introducing guide infixed into the collector, and the diffusion guiding plate of the embodiment in the present invention, viewed down from a left oblique front side;
FIG. 8 is a rear view which shows the collector, the introducing guide infixed into the collector, and the diffusion guiding plate of the embodiment in the present invention;
FIG. 9A is a perspective view (No. 1) which shows the action state of the diffusion guiding plate of the embodiment in the present invention, and
FIG. 9B is a perspective view (No. 2) which shows the action state of the diffusion guiding plate of the embodiment in the present invention;
FIG. 10A is a plan view (No. 1) which shows the action state of the diffusion guiding plate of the embodiment in the present invention, and
FIG. 10B is a plan view (No. 2) which shows the action state of the diffusion guiding plate of the embodiment in the present invention;
FIG. 11 is a flowchart of the embodiment in the present invention; and
FIG. 12 is a controlling block diagram of the embodiment in the present invention.

### Description of the Reference Numerals

- 5: mower
- 32: collector
- 70: introducing guide
- 71: bracket member
- 72: fulcrum shaft
- 72a: hub
- 73: diffusion guiding plate
- 73a: main-body part
- 73bL: rising wall part
- 73bR: rising wall part
- 74: swinging mechanism
- 82: filling-up sensor
- αL: swinging angle
- αR: swinging angle

### DESCRIPTION OF THE EMBODIMENTS

In the following, embodiments pertaining to the present invention are described in detail based on the drawings.

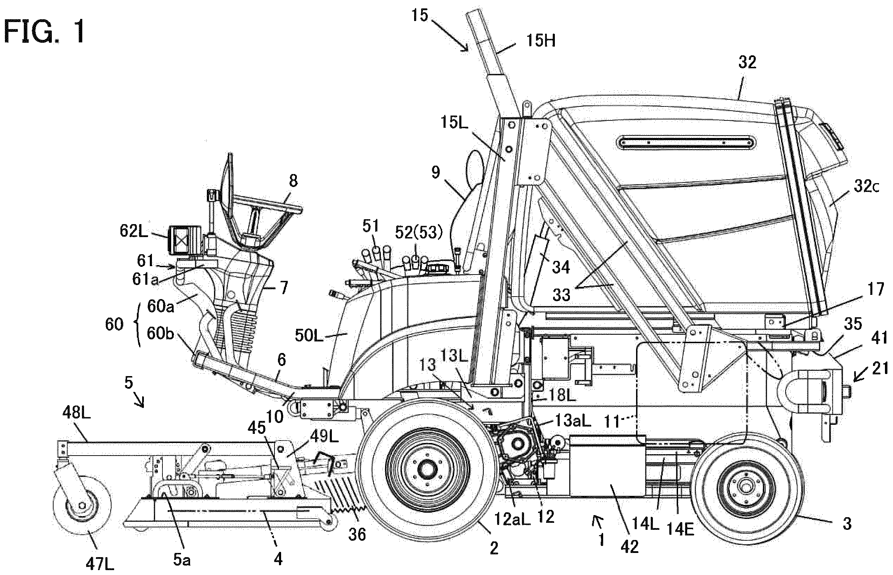

A side view of a riding lawn-grass mowing machine 1 of the present embodiment is shown in FIG. 1.

Front-wheels 2, 2 and rear-wheels 3, 3 are respectively provided at the front part and the rear part of a (running) vehicle-body 1, a mower 5 for lawn-grass mowing which possesses mowing blades 4 is provided below the front part of the vehicle-body 1 and ahead of the front-wheels 2, 2, and a so-called front mower is configured. A steering column 7 is standingly provided on a floor 6 above the front part of the vehicle-body 1, and a steering wheel 8 for steering is provided at the upper part of the aforementioned steering column 7. Moreover, a driving seat 9 is provided behind the aforementioned steering wheel 8.

Descriptions are given in detail regarding the frame configuration of the vehicle-body 1. Arranged from the front side are a floor frame 10 which supports the floor 6, the driving seat 9 and so forth, a transmission case 12 which contains a transmission-system which receives motive force of an engine 11 and drives the speed-changing device for running (for example, an HST) and the mower 5, a frame 13 for safety guard which is fixed to the upper part of the aforementioned transmission case 12, a left-and-right pair of side frames 14L, 14R which is connected to the lower end part of the transmission case 12 and supports the engine 11 and so forth, and so forth.

As for the floor frame 10, the front side is formed in a U-shape in plan view, the steering column 7 is supported at the front part, the driving seat 9 and the operation boxes of various levers and so forth are supported at the rear part, and the left and right rear ends are connected to a left side face 13L and a right side face of the frame 13 for safety guard in an overlapping state.

Left and right column parts 15L, 15R of a safety guard 15 are connected to the left side face 13L and the right side face of the frame 13 for safety guard, and the upper ends of these left and right column parts 15L, 15R are connected with a head part frame 15H. A left case connecting part 13aL of an L-type and a right case connecting part (not shown) being similar are respectively provided to the left and right lower part sides of the frame 13 for safety guard, these case connecting parts are fixed and connected to the upper face and the rear face of the transmission case 12, and thereby a strong rigidbody structure is obtained.

The transmission case 12 becomes a part which configures the frame structure of the vehicle-body 1 as described above, and a left running transmission case 12aL and a right running transmission case (not shown) being similar, which internally install transmission endless-belts to the front-wheels 2, 2, the gears and the like, are respectively installed to the left and right end parts of this transmission case 12, so that motive force can be transmitted.

The left and right side frames 14L, 14R are connected and fixed to the lower part of the transmission case 12. The aforementioned side frames 14L, 14R extend behind, oblique plates 14E, 14E for engine mounting are configured in the front-and-rear halfway part, and the engine 11 can be supported so that vibrations are prevented. And, at the rear end side of the side frames 14L, 14R, a rear axle case 16 is provided so as to be positioned thereabove.

The rear-wheel differential mechanism, the left and right axles, the speed-decreasing gear mechanism and so forth are internally installed in the inner part of the aforementioned rear axle case 16. The rear end of the side frame 14L, and the rear end of the side frame 14R are connected and fixed by a left-and-right connecting member 14S.

An upper part frame 17 is configured at a position slightly higher than the position of the engine 11. The aforementioned upper part frame 17 is shaped in a U-shape in plan view, the curved part is arranged at the rear side, and the left and right front end parts are connected to a frame in the neighborhood. In detail, the left and right front end parts are connected and fixed to a lateral frame 19 which connects a left-and-right pair of vertical frames 18L, 18R being standingly provided perpendicularly, the lower ends of which are fixed to the frame 13 for safety guard.

Next, descriptions are given regarding the configuration of the rear part out of the frame structure of the vehicle-body 1.

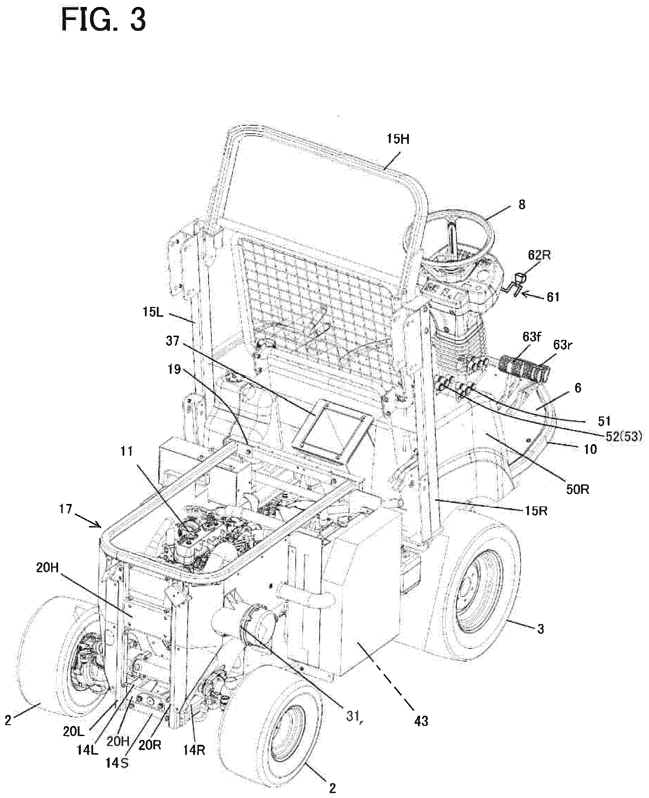

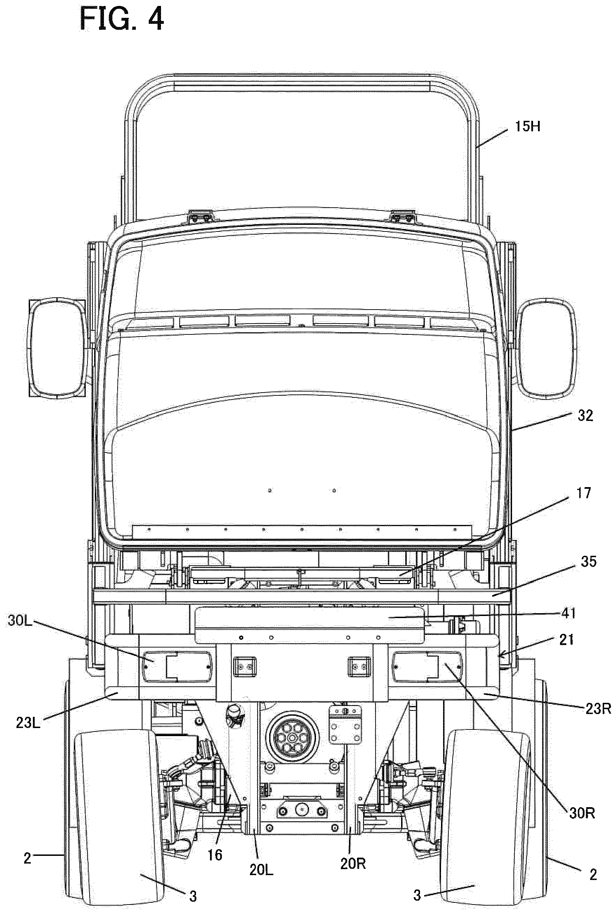

As shown in FIGs. 1 to 4, two vertical columns 20L, 20R also for reinforcement are provided between the rear ends of the left and right side frames 14L, 14R and the upper part frame 17. An appropriate number of lateral bars 20H, 20H are fixed to be provided between these vertical columns 20L, 20R in the up-and-down direction, and thereby reinforcement giving a ladder-shape is intended.

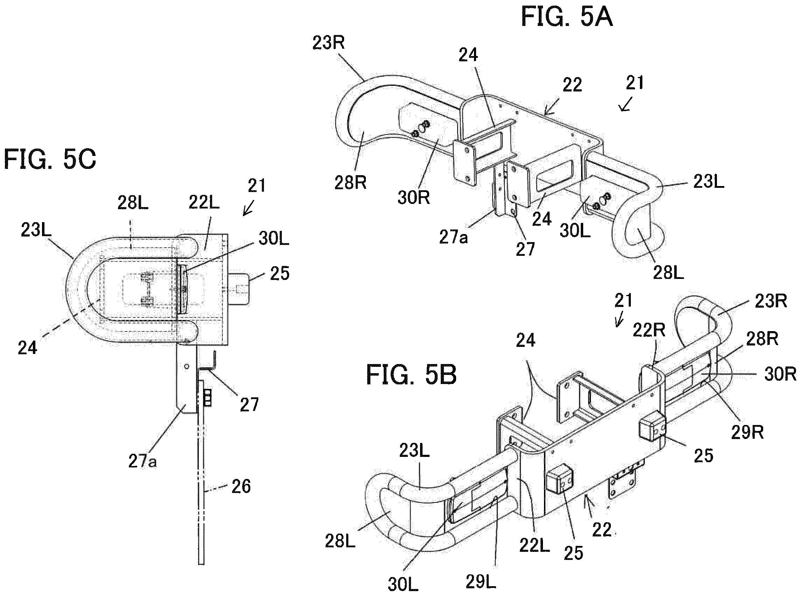

A (rear part) bumper 21 is provided on the lateral bar 20H arranged at a position slightly higher than the up-and-down central position of the vertical columns 20L, 20R. This bumper 21 possesses, as shown in FIGs. 5A to 5C, a central plate-metal-member 22 being thick at the center, and pipe-made guards 23L, 23R fixed in a state of being extended in the left-and-right direction from left and right bent parts 22L, 22R of the aforementioned central plate-metal-member 22.

The assist configuration as follows is added to the fundamental configuration of the bumper 21 which possesses the central plate-metal-member 22 and the pipe-made guards 23L, 23R. That is to say, a left-and-right pair of connecting arms 24, 24 is fixed to the front face of the central plate-metal-member 22 by welding and so forth so as to protrude ahead, and cushion rubbers 25, 25 are freely attachably/detachably fixed to the rear face of the aforementioned central plate-metal-member 22 by bolt-fastening to be apart from each other with an appropriate spacing in the left-and-right direction.

To the lower face of a central plate-metal-member 22 or the lower edge of one of the connecting arms 24, a metal-tool supporting plate 27a is provided so as to hang down, and an attaching metal-tool 27 for installing a number plate 26, which is bent in a crank-shape, is fixed to be provided to the aforementioned metal-tool supporting plate 27a.

By the bending in a crank-shape, the number plate 26 is positioned ahead in comparison with the fixing place with the central plate-metal-member 22. That is to say, the number plate 26 can be attached ahead, in comparison with the plane which includes the rear end face of the central plate-metal-member 22.

The front ends of the connecting arms 24, 24, which are provided so as to protrude ahead of the central plate-metal-member 22 of the (rear part) bumper 21, are fastened with bolts, selecting the one of the lateral bars 20H. Since the attaching position of the bumper 21 is established by the front-and-rear position of the selected lateral bar 20H and the length of the connecting arms 24, 24, the bumper 21 is arranged so that the central plate-metal-member 22 of the bumper 21 should be positioned slightly behind in side view in comparison with the rear end of a collector 32 described later. By arranging like this, an effect of the bumper 21 is exerted.

Regarding the pipe-made guards 23L, 23R which are fixed to the left and right bent parts 22L, 22R of the central plate-metal-member 22, as shown in FIGs. 5A to 5C, pipes are bent in a U-shape and are further bent approximately at right angles to be shaped, an up-and-down pair of edge parts is made to be positioned in the up-and-down direction, and the pipe-made guards 23L, 23R are respectively fixed to the left and right bent parts 22L, 22R by welding and so forth.

In these pipe-made guards 23L, 23R, the following configuration is added.

That is to say, closing plates 28L, 28R formed so as to be curved along the bending approximately at right angles are welded to be fixed to the front face side, so that a communication part enclosed by each of the pipe-made guards 23L, 23R is closed, and a guard effect is heightened.

Moreover, holes 29L, 29R for lamp installing are formed in the rear faces of the closing plates 28L, 28R, and combination lamps 30L, 30R for which complex lamplights such as a vehicle-width light, a brake light, a direction indicator and so forth are combined are inserted and fixed by bolt-fastening. The surface parts of the combination lamps 30L, 30R fixed to these holes 29L, 29R for lamp installing, that is to say, the faces which look to the rear side of the vehicle-body 1 are made to retreat, and are fixed to the front side in comparison with the perpendicular face which includes the rear edges of the pipe-made guards 23L, 23R being opposite in the up-and-down direction, and thereby damage of the combination lamps 30L, 30R due to collision against other things can be diminished.

By the central plate-metal-member 22 and the pipe-made guards 23L, 23R which are configuration members of the (rear part) bumper 21, even if the rear part of the vehicle-body 1 collides against other things and the vehicle-body 1 itself receives the shock thereof, there is an effect that an impairment is prevented or can be reduced.

Particularly, because the cushion rubbers 25 are provided in the rear part of the central plate-metal-member 22 so as to protrude behind in comparison with the central plate-metal-member 22 and the rear end faces of the pipe-made guards 23L, 23R, in backward running of the vehicle-body 1 and so forth, the aforementioned cushion rubbers 25 first collides to absorb the shock, and the shock to the side of the vehicle-body 1 can be alleviated.

In a case where a larger shock has been applied, or a shock from an oblique rear side of the vehicle-body 1 has been applied, even if the cushion rubbers 25 are insufficient, the main-body of the central plate-metal-member 22 and the pipe-made guards 23L, 23R receives the shock, and the shock to the vehicle-body 1 can be alleviated.

Additionally, the cushion rubbers 25 are freely attachably/detachably fixed by bolts. Specifically, a bolt installing hole is, as a penetration hole, formed so that the diameter is large at the bolt entrance side and becomes small halfway, and thereby a step-difference part which can engage with the head part of the bolt is halfway formed. The aforementioned step-difference parts are formed so that the cushion rubbers 25 can be attached. Sizes of the cushion rubbers 25 are variously prepared, and also a suitable size can be adopted.

Moreover, out of the left and right pipe-made guards 23L, 23R which configure the (rear part) bumper 21, at the inner side of the pipe-made guard 23R at the right side an air cleaner 31 is arranged. Like this, the pipe-made guards 23L, 23R can, because enclosure is formed throughout from the rear face to the side face, protect auxiliary-parts and the like of the engine 11 which are arranged at the inner side thereof. Additionally, a configuration like this is also aesthetically excellent.

As shown in FIG. 1, the collector 32 which contains mowed-grass is, via the ascending-and-descending mechanism, provided behind the safety guard 15, and above the upper part frame 17. The ascending-and-descending mechanism comprises ascending-and-descending arms 33 of parallel links, and an ascending-and-descending cylinder mechanism 34, one end side is connected to the frame 13 for safety guard which supports the safety guard 15, and another end is connected to a collector frame 35 on which the collector 32 can be placed.

Additionally, mowed-grass by the mower 5 receives the blowing action of the blower (not shown) and gets contained in the collector 32 by way of a bellows-hose 36 and a duct 37. The duct 37 is opposite to the receiving-inlet of the collector 32, the exit of the duct 37 and the receiving-inlet of the collector 32 coincide at the time of descending so that ascending-and-descending motion of the collector 32 is not hindered, and the duct 37 can easily get apart from the receiving-inlet of the collector 32 at the time of ascending.

In the side faces of the vehicle-body 1, an engine cover 40 which covers side faces of the engine 11 is arranged, and a rear part cover 41 is provided at the rear part side of the vehicle-body 1 so that the vicinity above the central plate-metal-member 22 of the bumper 21 is covered. By the existence of this rear part cover 41, mowed-grass which has fallen below from the collector 32 and has slipped down the surface of the aforementioned cover 41 can be made to fall behind the vehicle-body 1. A battery case 42 which contains a battery is arranged on the left side face of the vehicle-body 1, and a radiator 43 is arranged on the right side face of the vehicle-body 1.

Next, descriptions are given regarding the step and grip structure which assists ascending-and-descending to the floor 6.

The mower 5 sits below the floor 6 and, as for a mower deck 5a which covers the mowing blades 4 of the mower 5, in plan view, the central side thereof overlaps the floor 6, and the left and right end part sides of this mower deck 5a spread out to the outside in comparison with the projecting face of the floor 6.

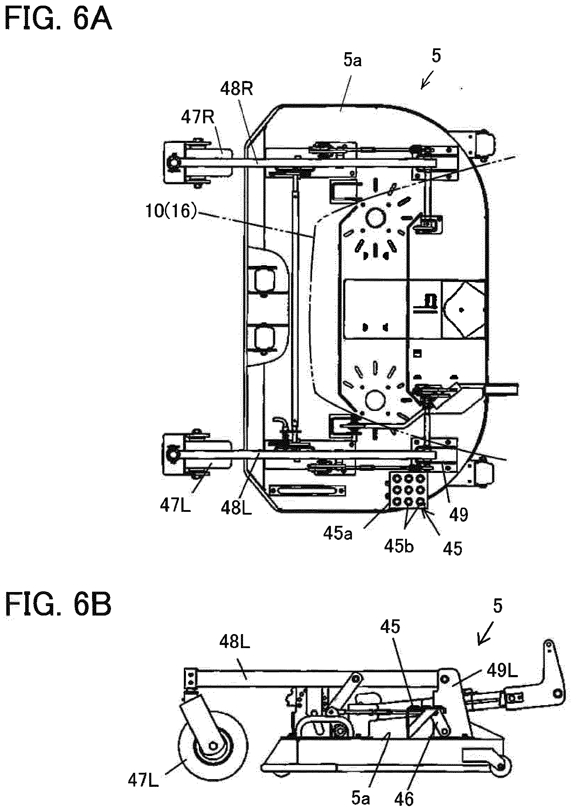

And, as shown in FIGs. 6A and 6B, a step 45 is fixed to be provided to the upper face of the mower deck 5a.

That is to say, as for this step 45, a belt plate is formed in an L-shape in side view. In a stepping-face 45a, hole parts 45b, 45b... for slip-preventing are formed. The hole parts 45b for slip-preventing are fixed to the upper face of the end part at one side (the left side end part in the example of the figure) of the mower deck 5a by an attaching member 46, with the aforementioned stepping-face 45a being the upper face.

By installing by this attaching member 46, the step 45 is arranged at the outside of a base part side bracket 49L of a supporting arm 48L of a left front gauge wheel 47L out of left and right front gauge wheels 47L, 47R of the mower 5.

Additionally, in plan view, the position of the step 45 is out of the projecting range of the floor frame 10 and the floor 6.

In time of ascending-and-descending to the floor 6, because ascending-and-descending motion is performed with two steps by stepping on this step 45 with the left foot or the right foot to get on board, the ascending-and-descending height can be lowered, and ascending-and-descending is facilitated. In the example of the figure, the step 45 is provided at the left side end part of the mower deck 5a, but the step 45 may be provided at the right side end part, and left and right steps may be respectively provided at the left and right both end parts.

As shown in FIGs. 1 to 3, regarding the configuration of the upper face of the floor 6, operation boxes 50L, 50R which support various operation levers and so forth are provided in the left and right side parts of the driving seat 9.

Three oil-pressure operation levers 51 to 53 are distributed in the operation box 50R at the right side, and all the oil-pressure operation levers are made to sway back and forth. Out of these, the oil-pressure operation lever 51 for mower ascending-and-descending which makes the mower 5 ascend or descend is provided at the front side position, and the oil-pressure operation lever 52 for collector ascending-and-descending which makes the collector 32 ascend or descend, and the oil-pressure operation lever 53 for mowed-grass discharging which opens a rear part collector-door 32c while inclining the collector 32 to the rear side are provided side by side at the rear side position. These oil-pressure operation levers 51 to 53 are all configured so that the spool of the oil-pressure valves should be interlocked.

Regarding the configuration of the periphery of the steering column 7, a front part bumper 61, which is made of a pipe-member, is provided to a supporting member 60 standingly provided from the front end part of the floor frame 10.

As for the shape of the aforementioned front part bumper 61, the left-and-right middle part is bent below, the left and right both end parts are bent behind, and the front side and the left and right both sides of the upper part of the steering column 7 are enclosed.

The upper ends of a left-and-right pair of curved uprising plates 60a, 60a are integrated by welding so as to be connected, angular U-shaped connecting parts 60b, 60b respectively provided at the left and right lower ends of the curved uprising plates 60a, 60a are fitted from the front end side of the floor frame 10, and the supporting member 60 is fixed by bolts.

As for the places bent behind, which are the left and right end part sides of the front part bumper 61, grip parts 61a are formed.

The front part bumper 61 can be used as a supporting member which supports headlights 62L, 62R.

Now, the speed-changing device for running (the HST) inside the transmission case 12 receives motive force form the engine 11 to be driven, and speed-increasing is carried out by stepping-on operation of frontward/rearward movement pedals 63f, 63r arranged on the floor 6.

As described above, mowed-grass by the mower 5 receives the blowing action of the blower (not shown), arrives at the receiving-inlet of the collector 32 by way of the bellows-hose 36 and the duct 37 and, while being released and diffused inside the collector 32, gets contained in the collector 32.

Descriptions are given in detail regarding the configuration of the receiving-inlet side of the collector 32, which is opposite to the upper end of the duct 37.

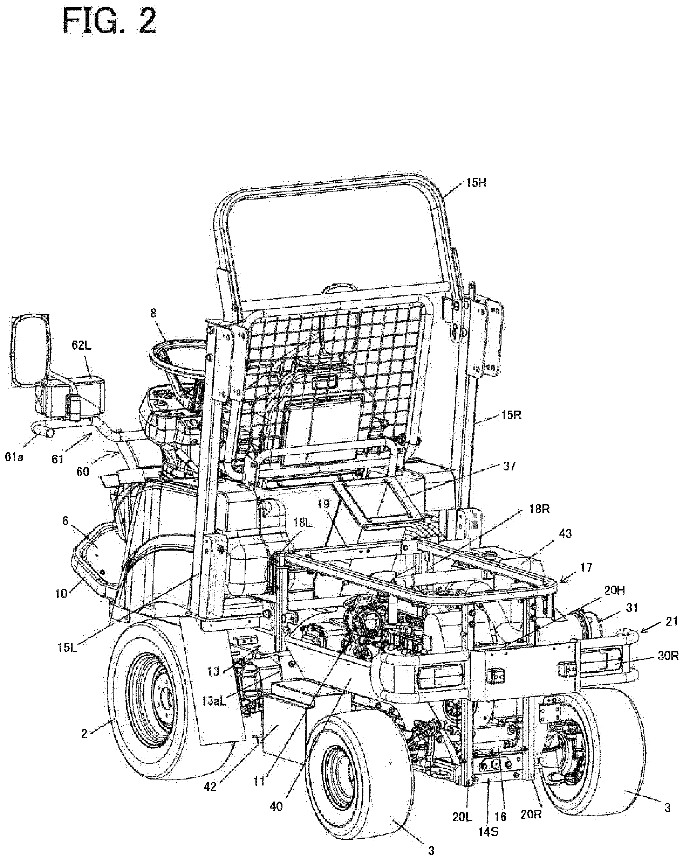

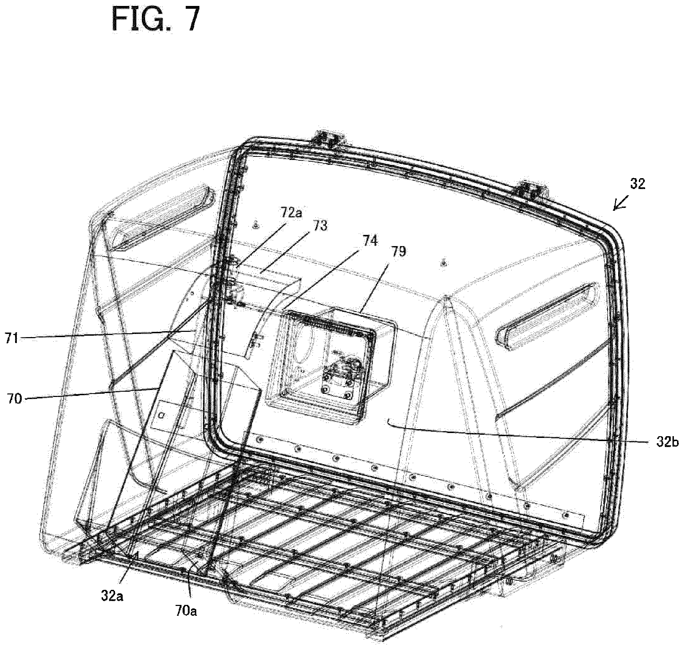

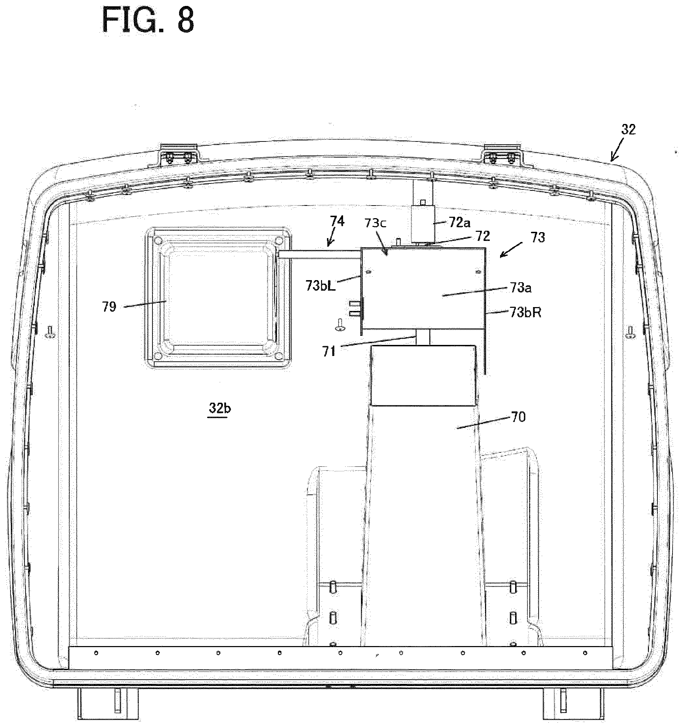

As shown in FIGs. 2, 3, 7 and 8, an introducing guide 70 in a square-cylinder-shape having an introducing aperture part in a rectangular shape is fixed to be provided, which corresponds to the shape (a rectangular shape in the example of the figure) of the upper end aperture part of the duct 37.

A flange part 70a is formed at the lower end side of the aforementioned introducing guide 70, and an aperture part 32a is formed at a position which is, viewed from the rear side, slightly displaced to the right side in comparison with the left-and-right midpoint of the collector 32. To this aperture part 32a, the introducing guide 70 is inserted from the outside of the collector 32. The flange part 70a is made to overlap the wall part of the collector 32 to be fastened and fixed, and thereby the introducing guide 70 is standingly provided in a posture slightly sloping to the rear side so that, in side view, the mowed-grass receiving lower end side is the front side and the upper end side is the rear side.

The introducing guide 70 may be formed in an inverted L-shape in side view so that mowed-grass, which has been blown up to the neighborhood of the collector ceiling through an approximately perpendicular portion of the introducing guide 70 along the inner wall face of a front wall part 32b, can be released to the rear side inside the collector 32.

The aperture part 32a of the collector 32 and the lower end aperture part of the introducing guide 70 are provided so as to correspond to the upper end aperture part of the duct 37. A diffusion guiding plate 73 is arranged on a line which is obtained by extending the straight-line in the longitudinal direction of the introducing guide 70 to the upper end side thereof, and mowed-grass can be released.

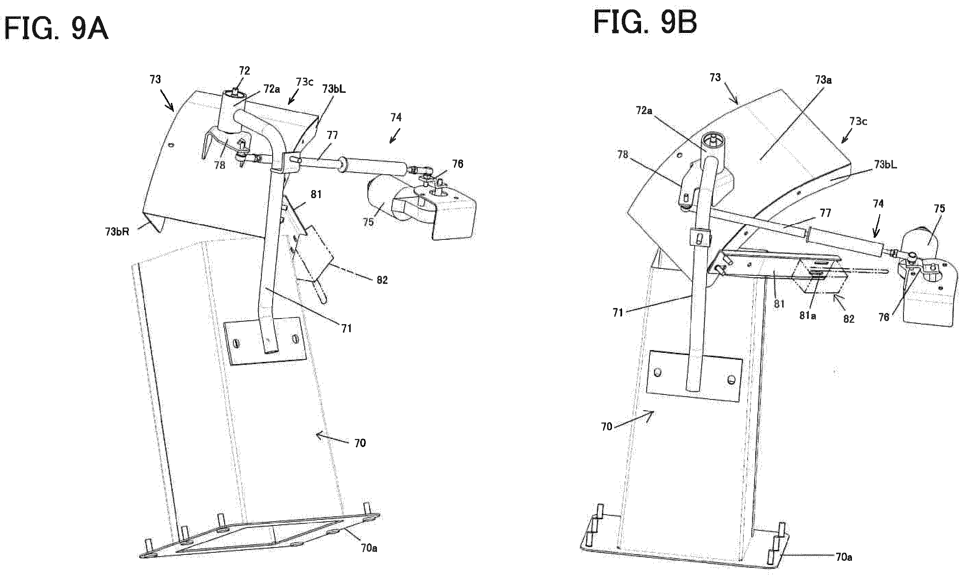

As shown in FIGs. 9A and 9B, the lower end side (the base part side) of a bracket member 71 in a pipe-shape is fixed to the front wall part of the introducing guide 70, and a hub 72a being able to hold a fulcrum shaft 72 at the upper end side thereof is provided.

That is to say, since the introducing guide 70 is standingly provided in a posture sloping to the rear side as described above, the lower end side of the bracket member 71 is fixed to the side face of the introducing guide 70 which looks to the upper side.

The diffusion guiding plate 73 possesses a main-body part 73a in a curved shape, which slants along a line which is obtained by extending the straight-line in the slant direction of the introducing guide 70, left and right rising wall parts 73bL, 73bR, and an opened part 73c at the rear face side. The fulcrum shaft 72 is standingly provided integrally to the central part of the main-body part 73a. The hub 72a holds the fulcrum shaft 72 so that the fulcrum shaft 72 is freely rotatable but cannot be freely inserted/extracted.

Hence, in the present embodiment, the fulcrum shaft 72 held by the bracket member 71 so as to be fixed is rotatably held by the diffusion guiding plate 73.

The fulcrum shaft 72 held by the diffusion guiding plate 73 so as to be fixed may be rotatably held by the bracket member 71.

A swinging mechanism 74 is interlockably connected to the fulcrum shaft 72, and the diffusion guiding plate 73 rotates around the approximately perpendicular fulcrum shaft 72 so as to go and return in the left-and-right direction.

The swinging mechanism 74 possesses a driving motor 75, a rotating arm 76, an interlocking rod 77, and a bracket 78.

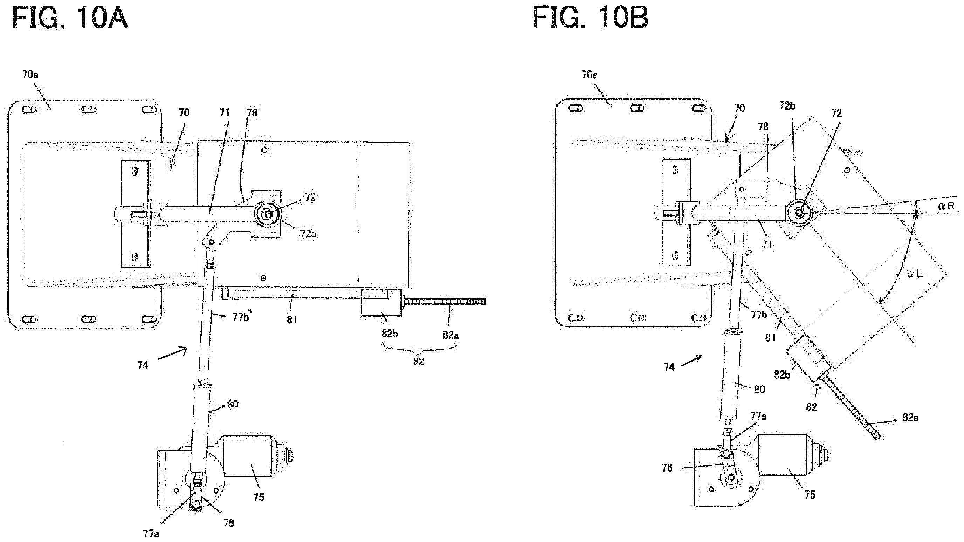

As shown in FIGs. 10A and 10B, the rotating arm 76 which rotates and interlocks by the driving motor 75 around the up-and-down shaft-center with a constant direction, and the bracket 78 are connected with the interlocking rod 77. In the range for which the connecting point of the rotating arm 76 and the interlocking rod 77 moves in the left-and-right direction, the diffusion guiding plate 73 swings, that is to say, moves so as to go and return in the left-and-right direction.

The phase angle position for which the bracket 78 is fixed to the fulcrum shaft 72, and the effective length of the aforementioned bracket 78 are set in the prescribed ranges, and thereby a swinging angle αL to the left side and a swinging angle αR to the right side of the diffusion guiding plate 73 can be determined.

Because of this, the diffusion guiding plate 73 is provided at a position which is displaced to the right side in the left-and-right direction, but the angle relation αL>αR is realized.

The driving motor 75, the longitudinal direction of which is the vehicle-body front-and-rear direction, possesses at the front part thereof a speed-decreasing gear mechanism (not shown) which supports the rotating arm 76 rotatably and interlockably around the up-and-down shaft-center. The driving motor 75 is installed to the front wall part 32b of the collector 32, and the outer periphery thereof is covered with a cover member 79.

The connecting part of the interlocking rod 77 connected to the bracket 78 at the side of the fulcrum shaft 72 is arranged between the bracket member 71 which supports the diffusion guiding plate 73 and the main-body part 73a of the diffusion guiding plate 73 but, since the lower end side (the base part side) of the bracket member 71 is connected to the introducing guide 70, there is an effect that the shape of the aforementioned bracket member 71 can be desirably formed while forming a margin space part below the bracket member 71.

In the halfway part of the interlocking rod 77, an elasticity buffering mechanism 80 is provided.

The interlocking rod 77 is divided into a first interlocking rod part 77a connected to the rotating arm 76, and a second interlocking rod part 77b connected to the bracket 78 at the side of the fulcrum shaft 72, the first interlocking rod part 77a and the second interlocking rod part 77b are arranged on the coaxial shaft-center, and both are connected by a coil spring as the elasticity buffering mechanism 80.

By configuring like this, when the direction of swinging gets inverted, by compression and reverse stretching of the coil spring (the elasticity buffering mechanism 80), the following-up speed of the rotating arm 76 instantaneously becomes slow. Accordingly, the diffusion guiding quantity of mowed-grass by the diffusion guiding plate 73 can be made large and, effectively using the corner parts of the collector 32, the mowed-grass filling quantity can be made large.

A single coil spring (the elasticity buffering mechanism 80) may be used, but coil springs the elasticity coefficients of which are appropriately different may be prepared and combined with serial-connection or dual-structure.

Regarding the left and right rising wall parts 73bL, 73bR of the diffusion guiding plate 73, as described above, the introducing guide 70 is provided at a position which is slightly displaced to the right side in comparison with the left-and-right midpoint of the collector 32. The diffusion guiding plate 73 is, in accordance with this, also arranged at a position which is displaced to the right side in the left-and-right direction. Hence, regarding the rising wall part 73bL at the left side, which is the wall part at the another side, the height is set low so that the diffusion guiding of mowed-grass is not hindered, and the effect for reinforcement of the diffusion guiding plate 73 becomes the main effect. And, regarding the rising wall part 73bR at the right side, which is the wall part at the one side, the shielding square-measure is enlarged, and an excessive diffusion discharging quantity to the right side is suppressed.

Of course, regarding the rising wall part 73bL at the left side, the height may be zero.

The base part of an attaching stay 81 of an L-shaped section is attached to the rising wall part 73bL at the left side, and a filling-up sensor 82 is provided to the tip-end side of the aforementioned attaching stay 81.

The filling-up sensor 82 possesses a spring rod 82a and a sensor main-body 82b. And, the spring rod 82a is arranged so as to look to the rear side, and the sensor main-body 82b is freely attachably/detachably fixed to the attaching stay 81. A long-hole 81a is formed at the side of the attaching stay 81, and the filling-up sensor 82 can be fixed so that the position in the longitudinal direction is changeable.

The tip-end part of the spring rod 82a warps so as to exceed the prescribed range, and thereby the limit switch inside the sensor main-body 82b is turned ON. That is to say, the filling-up sensor 82 is a publicly known sensor which outputs a filling-up signal to a controlling part C.

The filling-up sensor 82 moves so as to go and return along with left-and-right swinging of the diffusion guiding plate 73, and can output a filling-up signal in accordance with the mowed-grass filling situation.

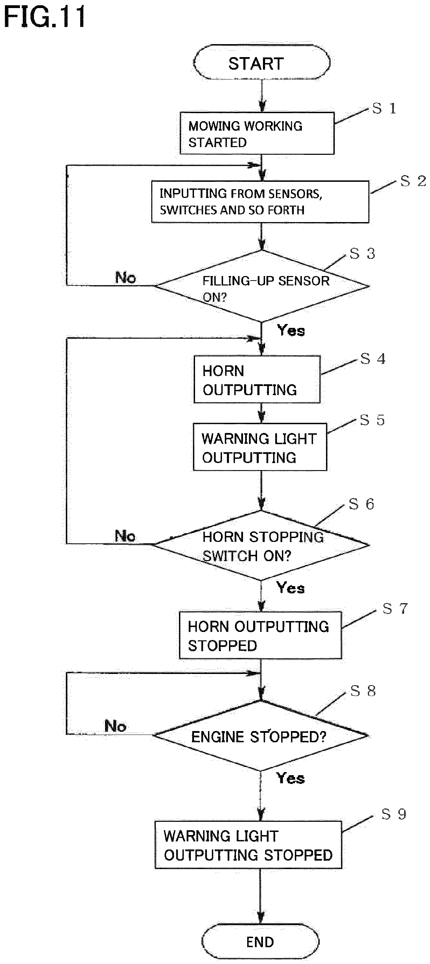

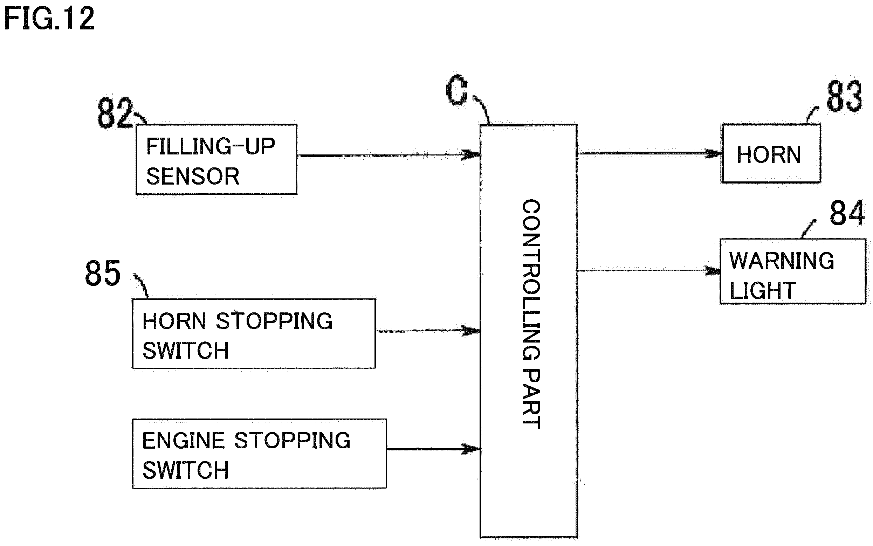

FIG. 11 is a flowchart which shows filling-up sensing controlling. FIG. 12 is a controlling block diagram.

During working continuation, it is periodically judged whether a filling-up signal from the filling-up sensor 82 is being output or not (Steps S1 to S3). And, if it is judged that a filling-up signal is being output, then a signal is output to each of a horn 83 and a warning light 84 (Steps S4 and S5).

The operator stops the outputting of the horn 83 with a horn stopping switch 85 (Steps S6 and S7).

At the same time, the operator knows from experience the margin quantity inside the collector 32 when a filling-up signal from the filling-up sensor 82 is being output, and continues working while the outputting of the warning light 84 is being performed.

And, since the operator estimates the real filling-up quantity and stops the working, in FIG. 11, the outputting of the warning light 84 is stopped by engine stopping (Steps S8 and S9).

## Claims

1. A lawn-grass mowing machine, comprising:
a collector (32) which contains lawn-grass mowed with a mower (5);
an introducing guide (70) provided inside the collector (32), which receives mowed-grass;
a diffusion guiding plate (73) arranged at one end side of the introducing guide (70);
a bracket member (71); and
a fulcrum shaft (72) held by the bracket member (71), wherein
the diffusion guiding plate (73) is held by the fulcrum shaft (72), and
the diffusion guiding plate (73) is configured so as to be swingable,
**characterized in that**
the bracket member (71) is fixed to the introducing guide (70).

2. The lawn-grass mowing machine according to claim 1, wherein
the introducing guide (70) is provided in a slant posture,
a lower end side of the bracket member (71) is fixed to a side face of the introducing guide (70), and
the fulcrum shaft (72) is held by an upper end side of the bracket member (71).

3. The lawn-grass mowing machine according to claim 1 or 2, wherein
the introducing guide (70) and the diffusion guiding plate (73) are provided so as to be displaced to one side of left and right sides with respect to a vehicle-body left-and-right direction, and
a swinging angle (αR) of the diffusion guiding plate (73) to the one side is smaller than a swinging angle (αL) to The other side.

4. The lawn-grass mowing machine according to claim 3, wherein
edges of the left and right sides of the diffusion guiding plate (73) with respect to the vehicle-body left-and-right direction, are bent, so that the diffusion guiding plate (73) comprises a wall part (73bR) at the one side to which the diffusion guiding plate (73) is displaced, and a wall part (73bL) at the other side, and
a shielding square-measure of the wall part (73bL) at the another side is smaller than a shielding square-measure of the wall part (73bR) at the one side.

5. The lawn-grass mowing machine according to claim 4, wherein
on the wall part (73bL) at the other side, a filling-up sensor (82) for sensing a filling-up of the lawn-grass, is provided.

## Patentansprüche

1. Rasenmähmaschine, umfassend:
eine Sammelvorrichtung (32), die Rasen, gemäht mit einer Mähvorrichtung (5), enthält,
eine Einsatzführung (70), die innerhalb der Sammelvorrichtung (32) bereitgestellt ist, die gemähtes Gras aufnimmt;
eine Diffusionsführungsplatte (73), die an einer Endseite der Einsatzführung (70) bereitgestellt ist,
ein Klammerelement (71); und
eine Drehspindel (72), die von einem Klammerelement (71) gehalten wird, wobei
die Diffusionsführungsplatte (73) von der Drehspindel (72) gehalten wird, und
die Diffusionsführungsplatte (73) derart konfiguriert ist, dass sie schwenkbar ist,
**dadurch gekennzeichnet, dass**
das Klammerelement (71) auf die Einsatzführung (70) fixiert ist.

2. Rasenmähmaschine nach Anspruch 1, wobei
die Einsatzführung (70) mit einer schrägen Lage bereitgestellt ist,
eine untere Endseite des Klammerelements (71) an eine seitliche Fläche der Einsatzführung (70) fixiert ist, und
die Drehspindel (72) von einer oberen Endseite des Klammerelements (71) gehalten wird.

3. Rasenmähmaschine nach Anspruch 1 oder 2, wobei
die Einsatzführung (70) und die Diffusionsführungsplatte (73) derart bereitgestellt sind, dass sie auf eine Seite von linken und rechten Seiten mit Bezug auf eine Links-Rechts-Richtung eines Fahrzeugkörpers verschoben sind, und
ein Schwenkwinkel (αR) der Diffusionsführungsplatte (73) auf die eine Seite kleiner als ein Schwenkwinkel (αL) auf die andere Seite ist.

4. Rasenmähmaschine nach Anspruch 3, wobei
Kanten der linken und rechten Seiten der Diffusionsführungsplatte (73) mit Bezug auf die Links-Rechts-Richtung des Fahrzeugs gebogen sind, so dass die Diffusionsführungsplatte (73) einen Wandteil (73bR) auf der einen Seite, zu dem die Diffusionsführungsplatte (73) verschoben ist, und einen Wandteil (73bL) an der anderen Seite umfasst, und
ein Abschirm-Flächenmaß des Wandteils (73bL) an der anderen Seite kleiner ist als ein Abschirm-Flächenmaß des Wandteils (73bR) an der einen Seite.

5. Rasenmähmaschine nach Anspruch 4, wobei
auf dem Wandteil (73bL) an der anderen Seite ein Befüllungssensor (82) zum Abtasten einer Befüllung des Rasens bereitgestellt ist.

## Revendications

1. Tondeuse à gazon comprenant :
un collecteur (32) qui contient le gazon tondu avec une tondeuse (5) ;
un guide d'introduction (70) prévu à l'intérieur du collecteur (32) qui reçoit le gazon tondu ;
une plaque de guidage de diffusion (73) agencée, au niveau d'un côté d'extrémité du guide d'introduction (70) ;
un élément de support (71) ; et
un arbre de pivot (72) maintenu par l'élément de support (71), dans laquelle :
la plaque de guidage de diffusion (73) est maintenue par l'arbre de pivot (72), et
la plaque de guidage de diffusion (73) est configurée pour pouvoir osciller,
**caractérisée en ce que** :
l'élément de support (71) est fixé au guide d'introduction (71).

2. Tondeuse à gazon selon la revendication 1, dans laquelle :
le guide d'introduction (70) est prévu dans une posture inclinée,
un côté d'extrémité inférieure de l'élément de support (71) est fixé à une face latérale du guide d'introduction (70), et
l'arbre de pivot (72) est maintenu par un côté d'extrémité supérieure de l'élément de support (71).

3. Tondeuse à gazon selon la revendication 1 ou 2, dans laquelle :
le guide d'introduction (70) et la plaque de guidage de diffusion (73) sont prévus pour être déplacés vers un côté des côtés gauche et droit par rapport à la direction gauche et droite du corps de véhicule, et
un angle d'oscillation (αR) de la plaque de guidage de diffusion (73) vers le un côté est inférieur à un angle d'oscillation (αL) de l'autre côté.

4. Tondeuse à gazon selon la revendication 3, dans laquelle :
les bords des côtés gauche et droit de la plaque de guidage de diffusion (73) par rapport à la direction gauche et droite du corps de véhicule, sont pliés, de sorte que la plaque de guidage de diffusion (73) comprend une partie de paroi (73bR) au niveau du un côté vers lequel la plaque de guidage de diffusion (73) est déplacée, et une partie de paroi (73bL) de l'autre côté, et
une mesure de surface de protection de la partie de paroi (73bL) au niveau de l'autre côté, est inférieure à une mesure de surface de protection de la partie de paroi (73bR) au niveau du un côté.

5. Tondeuse à gazon selon la revendication 4, dans laquelle :
sur la partie de paroi (73bL) au niveau de l'autre côté, un capteur de remplissage (82) pour détecter un remplissage du gazon, est prévu.
